**Europäisches Patentamt**

(19) **European Patent Office**

**Office européen des brevets**

(11) Numéro de publication: **0 091 366**
**B1**

(12) ## FASCICULE DE BREVET EUROPEEN

(45) Date de publication du fascicule du brevet:
**27.08.86**

(51) Int. Cl.⁴: **B 29 C 33/08**

(21) Numéro de dépôt: **83400659.5**

(22) Date de dépôt: **30.03.83**

(54) **Pressage d'articles en polymères thermodurcissables renforcés.**

(30) Priorité: **30.03.82 FR 8205397**

(43) Date de publication de la demande:
**12.10.83 Bulletin 83/41**

(45) Mention de la délivrance du brevet:
**27.08.86 Bulletin 86/35**

(84) Etats contractants désignés:
**AT BE CH DE GB IT LI LU NL SE**

(56) Documents cités:
**DE - C - 882 130**
**FR - A - 1 232 996**
**FR - A - 1 481 610**
**GB - A - 950 058**
**US - A - 3 551 952**

(73) Titulaire: **VETROTEX SAINT-GOBAIN, 767 quai des Allobroges, F-73000 Chambéry (FR)**

(72) Inventeur: **Bloemkolk, Willem, décédé (FR)**
Inventeur: **Blanc, André, Le vallon fleuri Rue des Belledonnes, F-73490 La Ravoire (FR)**

(74) Mandataire: **Eudes, Marcel et al, Saint-Gobain Recherche 39 Quai Lucien Lefranc, F-93304 Aubervilliers Cedex (FR)**

## Description

La présente invention a trait à la fabrication d'articles à base de polymères thermodurcissables renforcés et plus précisément au formage d'objets de formes diverses par moulage et polymérisation de préimprégnés, préparés en couches minces, épaisses, ou même en masses constituées de résines thermodurcissables renfermant diverses charges et jusqu'à 30% et plus de fibres de verre de renfort.

L'élaboration de nombreux panneaux plans ou peu bombés recourt à un formage qui s'apparente à l'emboutissage des tôles et s'effectue sous de très faibles pressions, sans fluage important, à partir de nappes planes plus ou moins complexes renfermant de tels produits.

S'il s'agit de pièces plus compliquées, le moulage des matières thermodurcissables peut au contraire s'effectuer par injection, comme dans le cas des matières thermoplastiques, mais sous très haute pression; il s'agit alors d'un procédé coûteux réservé à des pièces complexes, et qui n'est pas sans inconvénients pour la résistance des fibres de renfort.

Un autre procédé consiste à utiliser un moulage à pression moyenne de la matière mise en place à l'état pâteux entre les plateaux d'une presse conventionnelle; cette dernière solution permet d'obtenir des pièces d'épaisseurs variables, de formes plus simples que dans le cas précédent, néanmoins susceptibles de présenter des nervurations importantes, telles que des panneaux fortement bombés ou des caissons de types divers. C'est ce procédé que l'invention se propose de perfectionner.

Dans tous les cas, si l'on veut atteindre des cadences industrielles, le processus de fabrication exige en pratique un chauffage destiné à provoquer rapidement, après un stade éventuel de gélification, la polymérisation complète de la résine. Pour ce qui est du moulage conventionnel à pression moyenne à partir de préimprégnés à l'état pâteux, il est connu d'employer des moules chauffés par conduction. Toutefois, dès que l'épaisseur des pièces à fabriquer atteint quelques millimètres, l'opération se révèle difficile en raison de la mauvaise conductibilité thermique des matières utilisées et du caractère parfois très exothermique de la réaction; en bref, un chauffage externe permet difficilement d'obtenir dans de bonnes conditions une refluidification homogène et, par conséquent un fluage uniforme, non plus qu'une polymérisation à cœur.

Il est aussi connu d'utiliser les propriétés de bon nombre de résines thermodurcissables (en particulier les résines phénoliques ou polyesters) pour effectuer le chauffage par voie interne, sous l'effet des pertes diélectriques provoquées par un champ de haute fréquence. Ce processus, utilisé de longue date procure certes un échauffement plus homogène, tout au moins dans la mesure où le champ électrique est suffisamment uniforme; cependant, les pertes par les parois conduisent facilement à un inconvénient inverse du précédent.

Diverses tentatives ont donc été faites pour vaincre cette difficulté. On a bien entendu envisagé de chauffer la matière avant introduction dans le moule, à une température évidemment inférieure à sa température de gélification, pour augmenter le temps accordé à la maturation et réduire ainsi les gradients thermiques sans immobiliser à l'excès la pièce dans le moule. Un tel préchauffage possède en général pour avantages aussi bien de faciliter tout d'abord le fluage de la masse à mouler et permettre un bon remplissage du moule que d'accélérer les cadences en raccourcissant la durée de cuisson proprement dite, mais il complique la mise en œuvre.

On a encore entrepris, au moins dans des cas simples, de munir la face externe des parois de moulage, qui serviront aussi d'électrodes, d'un système de chauffage externe à fluide caloporteur permettant, après pressage, d'appliquer à l'ébauche obtenue un double échauffement, à la fois interne par haute fréquence et externe par conduction (GB-A 1 278 642).

On peut aussi chauffer extérieurement le moule par conduction sur la presse, avant de le transférer dans un four de polymérisation par chauffage diélectrique, ou inversement, pour amorcer la polymérisation, préchauffer la matière sous haute fréquence avant de la mouler à l'intérieur d'un moule chauffé par conduction, où s'achève la réticulation, compensant ainsi d'un stade à l'autre les écarts de température observés.

Le procédé le plus élaboré, déjà ancien (FR-A 1 232 996), se situe dans le même esprit; il prévoit les phases suivantes, correspondant à trois étapes de montée en température:

– préchauffage, de préférence externe et d'ailleurs facultatif;
– moulage à la cote désirée;
– chauffage diélectrique sous haute fréquence, bref et aussi précoce que possible, pour provoquer la gélification;
– chauffage final par conduction pour obtenir la polymérisation.

A l'opposé de cette solution complexe, il a également été proposé de minimiser seulement l'effet de paroi froide du moule, en employant, pour isoler des surfaces de formage le cœur de la pièce à mouler, une feuille déjà polymérisée, destinée à former ensuite face de parement. Mais dans ces moules dits froids ou qui, plus exactement, ne sont pas chauffés par une source externe de chaleur, les électrodes sont le plus fréquemment placées à l'extérieur du moule dont les outils de formage sont de préférence constitués, comme le montre le brevet GB 950 058, d'un matériau à faibles pertes diélectriques, qui isole ainsi thermiquement ces électrodes de la matière et minimise donc les échanges calorifiques, mais qui risque cependant de s'échauffer lui-même à l'excès sous l'effet du champ électrique ou de s'altérer chimiquement.

On peut alors (FR A 2 334 497) équiper le moule de parois internes conductrices minces, thermiquement isolées par lui de la structure porteuse résistant à la pression, de façon que ces parois, constituant les armatures du condensateur de chauffage HF présentent une faible inertie thermique et ne refroidissent donc pas trop la matière.

L'invention se propose de parvenir à des résultats analogues par la voie la plus simple. Elle consiste:

– à chauffer la matière par voie interne essentiellement dès le début de son pressage pour atteindre, par une montée en température suffisante et homogène, la fluidification qui permet d'obtenir un parfait remplissage du moule;

– à continuer de chauffer par voie interne après formage et obtention de la cote désirée essentiellement jusqu'à la fin de la cuisson pour porter le cœur de la pièce à la température voulue, tout en stockant dans le moule, formé d'éléments métalliques servant d'électrodes au contact de la matière et isolées extérieurement mais d'une épaisseur suffisante pour avoir une capacité calorifique à tout le moins égale à celle de la pièce à mouler, la chaleur que cette matière leur transmet par conduction, de façon à se trouver en mesure de réutiliser cette chaleur après un temps mort minimal dû au démoulage, pour combiner dès le début de l'opération suivante un chauffage externe de la matière, à partir de la masse du moule, avec un chauffage interne par haute fréquence.

Une fois le régime permanent obtenu, il est facile de se rendre compte que l'invention permet, par l'emploi d'une source d'énergie unique mais mise en œuvre en même temps que le pressage, d'obtenir très simplement un processus d'élaboration des pièces qui s'est révélé d'une efficacité au moins comparable à celle des procédés antérieurs les plus complexes.

L'invention propose un procédé et une presse qui sont précisés respectivement dans les revendications indépendantes 1 et 3 les caractéristiques des premières parties de ces revendications étant comprises dans l'état de la technique selon le document FR-A 2 334 497.

Les exemples, dont le premier sera décrit en référence aux dessins, permettront de faire apparaître de façon plus détaillée les caractéristiques de l'invention.

Ces dessins montrent:

– fig. 1: une double représentation groupant une vue en plan (a) et une coupe élévation (b) d'une pièce en résine renforcée,

– fig. 2: en coupe élévation, un moule destiné à la mise en œuvre de l'invention.

– fig. 3: un détail sur le joint du moule montré fig. 2.

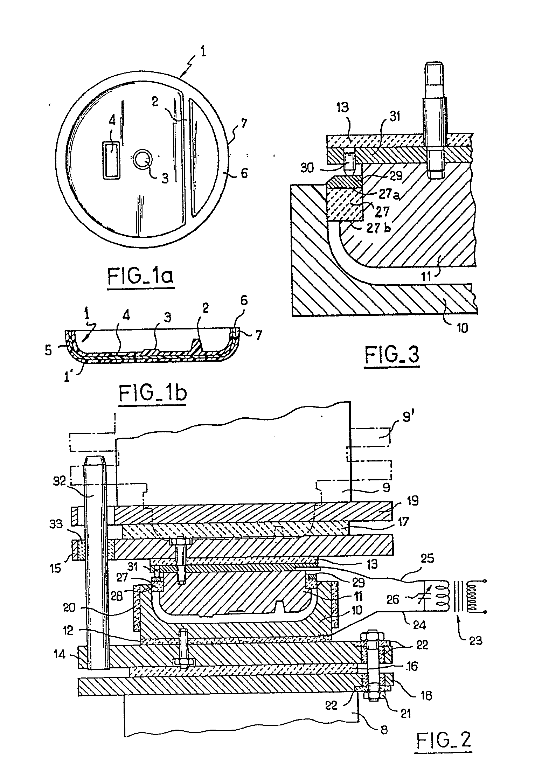

La pièce visible sur la figure 1 est un boîtier circulaire 1 possédant la forme d'une cuvette d'un diamètre de 250 mm et d'une épaisseur de 13 mm, barrée intérieurement par une nervure 2 qui court d'un bord à l'autre, porteuse en outre d'un bossage circulaire tronconique 3 et d'un logement 4, parallélépipédique avec une légère dépouille. Les bords relevés 5, d'une hauteur de 40 mm, possèdent une lèvre supérieure 6 d'une largeur de 5 mm et, au voisinage de son arête extérieure, une portée externe cylindrique 7 d'une hauteur de 12 mm. Sa masse est de 1320 g.

Le moule, représenté figure 2, est monté sur les mâchoires 8 et 9 d'une presse hydraulique, la première fixe et solidaire du bâti, la seconde mue par un vérin capable de développer une force de 70 tonnes. Il se trouve en position fermée, en fin de course de pressage mais vide, et sa mâchoire 9 est également figurée en 9′, en traits mixtes dans la position qui permet d'y introduire la masse à mouler. Il se compose de deux parties métalliques amagnétiques, en alliage léger (AU4G : 2017 A; NF A 50451) par exemple, à savoir une matrice 10 associée à un poinçon 11, dont les masses respectives sont de 8 et 7 kg, plus de cinq fois supérieures à celle du boîtier 1. Ces deux pièces constituent des parois épaisses portées respectivement, avec interposition de deux couches isolantes 12 et 13 en amiante-ciment de 5 mm d'épaisseur, par deux plaques de montage 14 et 15, elles aussi en alliage léger 2017 A. Les deux couches d'amiante-ciment 12 et 13 ont un rôle essentiellement thermique et permettent de retenir, donc d'accumuler à l'intérieur du moule, conformément à l'invention, la chaleur dégagée au sein des pièces au cours du traitement.

Les plaques 14 et 15 sont elles-mêmes montées sur les mâchoires de la presse, avec interposition de deux couches isolantes 16 et 17, par l'intermédiaire de deux plateaux support en acier 18 et 19. Une jupe thermiquement isolante 20 peut entourer totalement ou partiellement la matrice 10 pour réduire encore les pertes thermiques du moule.

Les deux couches isolantes 16 et 17, d'une épaisseur de 25 mm, sont constituées d'une résine fluorée telle que le polytétrafluoréthylène, et tout en répartissant la pression sur le moule, elles remplissent essentiellement un rôle d'isolant électrique. Les plaques 14 et 15 sont fixées sur les plateaux 18 et 19 par des boulons 21 isolés par des bagues céramiques 22.

Les deux parties principales du moule, à savoir la matrice 10 et le poinçon 11 constituent les deux armatures d'un condensateur qui permet de créer dans l'espace interne et par conséquent dans la résine un champ électrique de haute fréquence. A cette fin, le moule est alimenté en courant sous une tension de 2 kV et à une fréquence de 13,5 MHz, à partir d'un générateur 23 d'une puissance disponible de 5 kW qui lui est raccordé par deux conducteurs 24 et 25 dont le second au moins est constitué d'une tresse métallique souple. Ce générateur est muni d'un circuit d'accord réglable représenté sur la figure sous la forme du condensateur variable 26.

Un joint isolant rigide 27 vient fermer l'espace intérieur dessinant la pièce lors de la descente du poinçon. Il s'agit d'un joint radial qui, après avoir atteint la position de fermeture, vient coulisser en face de la paroi cylindrique interne 28 de la matrice.

De façon avantageuse, et comme le montre mieux la figure 3, c'est la face inférieure 27 a du joint 27 qui, débordant suffisamment sur la partie inférieure du poinçon, forme la portée délimitant la lèvre supérieure 6 du boîtier 1 ; mais il importe que sa face supérieure 27 b soit bien épaulée pour qu'il reste pratiquement exempt de déformation sous l'effort important que lui transmet alors la pression de moulage. Le joint est donc monté sur le poinçon dans un dégagement périphérique où il est maintenu en place par une bride 29 que pressent des vis 30 disposées sur le pourtour d'une plaque de montage 31, toujours en alliage léger. Bien entendu, il est également indispensable que l'espacement entre les parties métalliques du moule solidaires du poinçon et de la matrice reste partout suffisant pour éviter l'apparition d'une décharge entre les armatures.

En tout état de cause il est nécessaire que le joint soit rigide, résistant à l'usure, qu'il n'adhère pas à la matière plastique utilisée et que son coefficient de pertes diélectriques soit sufisamment faible. C'est pourquoi on adoptera avantageusement un joint constitué d'une âme rigide en polyimide armée de fibres de verre mais revêtue d'une couche anti-adhérente en polytétrafluoréthylène.

Pour que le jeu existant alors entre le joint 27 et la paroi 28 reste uniforme sur l'ensemble du pourtour du moule, la plaque 14 reçoit des colonnes 32 sur lesquelles des bagues électriquement isolantes 3, en céramique, guident en face d'elle la plaque de montage 15.

Un jeu diamétral de l'ordre de 0,2 mm crée une fente suffisante pour permettre à l'air de s'échapper au fur et à mesure que le poinçon, continuant à descendre après la fermeture du moule, écrase la masse à mouler mais cependant assez faible pour empêcher, par le jeu des forces capillaires, la résine de fluer vers l'extérieur dans les régions où elle atteint le joint 27, ce qui oblige la matière à remplir progressivement l'espace libre délimité par ce joint. Au fur et à mesure de la descente du poinçon, la matière vient ainsi remplir la totalité de l'espace interne, en chassant l'air, jusqu'à ce que l'augmentation de pression résultant de l'incompressibilité de la résine vienne équilibrer la pression du vérin, réglée à une valeur de 2 à 3 MPa.

Le chauffage sous haute fréquence commence aussitôt après chargement du moule, dès que les armatures sont assez rapprochées pour qu'un champ électrique suffisamment intense puisse apparaître entre elles. En pratique, le générateur 23 peut être mis en route à peu près au moment où le joint 27 vient fermer le moule, la capacité du condensateur formé par ce dernier augmentant au fur et à mesure que le poinçon se rapproche de la matrice. Il est intéressant, pour qu'un champ électrique suffisant apparaisse aussitôt que possible et se maintienne à la valeur désirée pendant toute l'opération, de faire varier l'accord du générateur en fonction de la course du poinçon en modifiant selon un programme convenable la capacité du condensateur 26.

En fin d'opération, la pièce est expulsée par un système d'éjecteurs électriquement isolés, qui, par raison de simplicité, n'a pas été montré sur les dessins car il est de structure classique.

Deux exemples de fabrication de pièces selon l'invention seront décrits de façon détaillée. Ils correspondent au moulage de pièces en polyester, l'une de caractéristiques correspondant à celles qui ont été décrites en liaison avec la description des figures, l'autre ayant la forme d'une coupelle tronconique de plus petites dimensions. Dans le premier cas, on a utilisé un préimprégné d'une masse surfacique de 42 kg/m², découpé en pastilles circulaires. Dans le second, un préimprégné d'une masse surfacique de 5 kg/m², découpé en blocs de forme carrée. La composition du produit, les dimensions principales des pièces fabriquées et les principaux paramètres du moulage sont donnés pour chacun des exemples dans le tableau ci-après. Dans le cas de l'exemple 1, des essais ont en outre été faits à l'aide d'un préimprégné constitué de trois couches superposées, de 4 mm d'épaisseur chacune et de même composition mais différemment colorées. Ils ont permis de montrer que, contrairement à ce qui se produit au cours d'une opération de moulage classique dans laquelle le moule resterait à basse température, les trois couches de matière fluent de façon pratiquement identique et sont ainsi présentés sous des épaisseurs sensiblement égales dans la quasi-totalité de la section transversale de la pièce, comme le représente la figure 1 qui fait apparaître les deux lignes de démarcation 1' que l'on peut alors observer en coupe.

| Préimprégné | épais (1 couche) | mince (6 couches) |
|---|---|---|
| Dimensions des blocs (mm) | ⌀/200×12 | ⊡/80×12 |
| Composition (parties en poids) | 100 | 100 |
| – Résine polyester («Leguwal W 20» de Bayer) | | |
| – Carbonate de calcium («Millicarb Omya BL» de Omya) | 100 | 100 |
| – Poudre de polyéthylène («Coathylène» de Plast-Labor) | 3 | 3 |
| – Stéarate de zinc | 3 | 3 |
| – Oxyde de titane | 3 | 3 |
| – Oxyde de magnésium empâté | 4,8 | 1 |
| – Perbenzoate de tertiobutyle («Trigonox C» | 1 | |

| Préimprégné | épais (1 couche) | mince (6 couches) |
|---|---|---|
| «Trigonox 21 S» de la Chalonnaise des Peroxydes) | 100 | 1 100 |
| Renfort fibres de verre («EC 17 4800 P 279» de VSG) | | |
| | | |
| Pièce moulée | | |
| Masse | 1320 g | 200 g |
| Diamètre | 250 mm | 170 mm |
| Epaisseur | 13 mm | 5 mm |
| Hauteur | 40 mm | 30 mm |
| | | |
| Moulage | | |
| Pression maximale | 3 MPa | 2 MPa |
| Température de moule | 145 °C | 125 °C |
| Tension d'alimentation | 2 kV | 2 kV |
| Fréquence | 13,5 MHz | 13,5 MHz |
| Puissance HF utilisée | 4 kW | 1,7 kW |
| | | |
| Cycle opératoire | | |
| · Chargement du moule | 10 s | 10 s |
| · Fermeture du joint | | |
| Mise sous tension | 3 s | 3 s |
| · Remplissage de la cavité | ~30 s | ~30 s |
| · Cuisson | | |
| Arrêt HF | ~230 s | ~50 s |
| · Ejection | 4 s | 4 s |
| · Ouverture du moule | 5 s | 5 s |
| | | |
| Total | 4 min 30 s | 1 min 30 s |

## Revendications

1. Procédé de moulage à pression moyenne de polymères thermodurcissables renforcés à partir de préimprégnés mis en place à l'état pâteux, au cours duquel la matière est soumise à un chauffage interne par pertes diélectriques sous haute fréquence seulement accompagné d'un échauffement indirect du moule à son contact, caractérisé en ce qu'on chauffe cette matière par voie interne essentiellement dès le début de son pressage, aussitôt obtenue la fermeture du moule et jusqu'à la fin de la cuisson, stockant ainsi progressivement dans le moule, par conduction la chaleur dégagée au sein des pièces puis, après démoulage et nouveau remplissage immédiat du moule, l'utilisant pour obtenir aussi, à partir de la masse du moule, un chauffage externe de la matière uniformisant sa température.

2. Procédé selon la revendication 1, caractérisé en ce que l'on fait varier l'accord du circuit haute fréquence en fonction de la course de fermeture du moule.

3. Presse pour le moulage à pression moyenne de polymères thermodurcissables renforcés équipée d'un moule dont la cavité est formée par les électrodes, thermiquement isolées de l'extérieur, d'un dispositif de chauffage interne par pertes diélectriques sous haute fréquence, caractérisée en ce que ces électrodes (10, 11), essentiellement constituées d'éléments en alliage léger, possèdent néanmoins une capacité calorifique à tout le moins égale à celle de la pièce à mouler.

4. Presse selon la revendication 3, caractérisée en ce que le moule possède pour électrodes un poinçon (11) et une matrice (10) isolés thermiquement de leur plaques de montage (14–15) et entourés extérieurement par une jupe d'isolation thermique (20).

5. Presse selon l'une des revendications 3 et 4, caractérisée en ce que la cavité interne du moule est fermée par un joint radial (27) laissant un jeu uniforme sur toute sa périphérie, des organes externes électriquement isolés guidant l'un par rapport à l'autre le poinçon et la matrice.

6. Presse selon la revendication 5, caractérisée par un joint mixte en polyimide armé revêtu de polytétrafluoréthylène.

## Claims

1. Method of medium-pressure moulding of reinforced thermosetting polymers, using prepregs placed in position in the pasty state, during the course of which process the material is subjected to internal heating through dielectric losses under high frequency only accompanied by indirect heating of the mould upon contact, characterized in that this material is heated by an internal route essentially from the onset of the pressing stage, as soon as the mould has been closed, and until firing is completed, thus progressively storing in the mould by conduction the heat which is liberated within the items during the course of treatment and then, after removal from the mould and fresh immediate filling of the mould, utilizing it in order to obtain from the mass of the mould an external heating of the material, establishing uniformity of its temperature.

2. Method according to Claim 1, characterized in that agreement of the high frequency circuit is varied according to the distance travelled as the mould is closed.

3. Press for medium pressure moulding of reinforced thermosetting polymers equipped with a mould of which the cavity is formed by electrodes thermally insulated from the outside ambient, a device for internal heating via dielectric losses under high frequency, characterized in that these electrodes (10, 11) constituted essentially of light alloy elements, nevertheless have a calorific capacity at least equal to that of the piece to be moulded.

4. Press according to Claim 3, characterized in that the mould has for electrodes a punch (11) and a matrix (10) which are thermally insulated from their mounting plates (14–15) and externally enclosed within a heat insulating skirt (20).

5. Press according to one of Claims 3 and 4, characterized in that the inner cavity of the mould is closed by a radial seal (27) leaving a uniform clearance over its entire periphery, electrically insulated external members guiding the punch and the matrix in relation to each other.

6. Press according to Claim 5, characterized by a mixed reinforced polyimide seal coated with polytetrafluoroethylene.

## Patentansprüche

1. Verfahren zur Verformung von verstärkten, wärmehärtenden Polymeren bei mittlerem Druck, ausgehend von vorimprägnierten an Ort und Stelle angeordneten Körpern im pastenförmigen Zustand, wobei im Laufe dieses Verfahrens das Material nur einem inneren Erhitzen aufgrund dielektrischer Verluste unter Hochfrequenz unterworfen wird, wobei dieses innere Erhitzen von einem indirekten Erhitzen der Pressform in Berührung mit dem Material begleitet ist, dadurch gekennzeichnet, dass man dieses Material auf innerem Wege, und im wesentlichen gleich ab dem Beginn des Pressens desselben, sobald das Schliessen der Pressform bewirkt worden ist, und bis zum Ende des Aushärtens erhitzt, wobei auf diese Weise in der Pressform jene Wärme fortschreitend durch Wärmeleitung gespeichert wird, welche im Inneren der Stücke im Laufe ihrer Behandlung freigesetzt worden ist, und dass man anschliessend, nach dem Herausnehmen des Stückes aus der Pressform und dem neuerlichen, sofortigen Anfüllen der Pressform, diese Wärme dazu benützt, um auch, ausgehend von der Masse der Pressform, ein äusseres Erhitzen des Materials zu erreichen und die Temperatur des Materials gleichförmig zu gestalten.

2. Verfahren nach Anspruch 1, dadurch gekennzeichnet, dass man die Einstellung des Hochfrequenzstromkreises als eine Funktion des Ablaufes des Schliessvorganges der Pressform variiert.

3. Presse für die Verformung von verstärkten, wärmehärtbaren Polymeren bei mittlerem Druck, welche mit einer Pressform ausgestattet ist, deren Hohlraum von Elektroden gebildet wird, die nach aussen wärmeisoliert sind, und welche Presse weiterhin mit einer Vorrichtung zur inneren Erwärmung aufgrund von dielektrischen Verlusten unter der Einwirkung von Hochfrequenz ausgerüstet ist, dadurch gekennzeichnet, dass diese Elektroden (10, 11) im wesentlichen aus Elementen aus einer Leichtmetall-Legierung bestehen, dass sie aber nichtsdestoweniger eine Wärmekapazität aufweisen, welche wenigstens gleich gross wie jene des zu verformenden Stückes ist.

4. Presse nach Anspruch 3, dadurch gekennzeichnet, dass die Pressform als Elektroden einen Prägestempel (11) und eine Matrize (10) aufweist, welcher Prägestempel und welche Matrize gegenüber ihren Montageplatten (14, 15) wärmeisoliert und aussen von einem Wärmeisoliermantel (20) umgeben sind.

5. Presse nach einem der Ansprüche 3 und 4, dadurch gekennzeichnet, dass der innere Hohlraum der Pressform durch eine Radialdichtung (27) abgeschlossen ist, welche auf ihrem gesamten äusseren Umfang einen gleichförmigen Spielraum freilässt, wobei der Prägestempel und die Matrize durch äussere, elektrisch isolierte Organe in bezug aufeinander geführt werden.

6. Presse nach Anspruch 5, gekennzeichnet durch eine Verbunddichtung aus verstärktem Polyimid, welches mit Polytetrafluorethylen überzogen ist.

FIG_1a

FIG_1b

FIG_3

FIG_2